# EUROPÄISCHE PATENTSCHRIFT

(11) **EP 0 593 077 B1**
(45) Veröffentlichungstag und Bekanntmachung des Hinweises auf die Patenterteilung: **07.01.1998**
(21) Anmeldenummer: 93116721.7
(22) Anmeldetag: 15.10.1993
(51) Int. Cl.: H01H 23/04, H02B 1/044

(54) **Geräteschalter**
Apparatus switch
Interrupteur d'appareil

(30) Priorität: 16.10.1992 FI 924681
(43) Veröffentlichungstag der Anmeldung: 20.04.1994
(73) Patentinhaber: A. AHLSTROM CORPORATION, 29600 Noormarkku (FI)
(72) Erfinder: Seger, Leif, SF-07920 Lovisa (FI)
(74) Vertreter: Füchsle, Klaus, Dipl.-Ing.

(56) Entgegenhaltungen:
- DE-B- 1 615 774
- DE-B- 1 921 571
- DE-U- 8 202 396
- FR-A- 1 558 202
- US-A- 3 770 920

## Beschreibung

Die vorliegende Erfindung betrifft einen Geräteschalter zum Einbau in ein Elektrogerät oder eine Elektroanlage, bestehend aus einer Schaltereinheit mit einem Sockel und darin angeordneten Leitungs-Anschlußmitteln und einem mit einer Kipptaste oder dgl. zu betätigenden Stell- und Kontaktgliedmechanismus zur Bildung eines elektrisch leitenden Strompfades über den genannten Stell- und Kontaktgliedmechanismus zwischen mindestens zwei Leitungs-Anschlußmitteln.

Bei den bisher bekannten Schaltern wird entweder eine horizontale Konstruktion, bei der auf die Veröffentlichung US-5051550 verwiesen wird, oder eine vertikale Konstruktion benutzt, bei der auf die Veröffentlichung US-5072086 verwiesen wird. Bei der liegenden Konstruktion befinden sich die festen Kontaktstifte im allgemeinen in horizontaler Lage, während die beweglichen Kontaktstifte sich mit der Kontaktwippe im allgemeinen auf und ab bewegen. Der Vorteil der horizontalen Konstruktion besteht in einem kurzen Schaltweg und einer schnellen Kontaktbewegung, einen Nachteil bildet aber die beachtliche Baulänge. Bei der vertikalen Konstruktion befinden sich die stationären Kontaktstifte im allgemeinen in vertikaler Stellung, und die beweglichen Kontaktstifte sind über eine senkrechte Konktaktstange mit der als Betätigungshebel dienenden Kontaktwippe verbunden und führen eine pendelartige Bewegung in seitlicher Richtung aus. Durch die vertikale Konstruktion kann eine kurze Baulänge erreicht werden, nachteilig aber ist, daß die zustande gebrachte Bewegung direkt übersetzt, linear und träge ist und Funkenbildung am Kontakt zur Folge hat.

Bei der Konstruktion des Geräteschalters gelten als schwerwiegende Kriterien, daß im Inneren des Geräteschalters außer Fachleuten niemand was zu suchen haben sollte, daß der Geräteschalter sich möglichst unauffällig in das betreffende Gerät einfügen soll und daß die Geräteschalterkonstruktion ein unbeabsichtigtes Berühren von oder den Zugang zu spannungsführenden Teilen verhindern soll. Aus diesen Gründen hat sich die Konstruktion von Geräteschaltern von der Konstruktion herkömmlicher Schalter differenziert und z.B. die in der Branche bekannten OEM-Schalter hervorgebracht. Ein konventioneller Geräteschalter umfaßt einen Sockel, in dem sich eine zweckentsprechend konstruierte Schalterkonstruktion befindet, und mit dem Sockel verbunden eine für das äußere Design zuständige Geräteblende, die auf der Vorderseite des Sockelrahmens angebracht wird und als Abdeckung der Installationsöffnung nach außen sichtbar bleibt, und eine ein unbeabsichtigtes Berühren von oder den Zugang zu spannungsführenden Teilen verhindernde Schutzhaube, die am Gerät auf der Rückseite des Sockels angebracht wird und unsichtbar bleibt.

Durch die vorliegende Erfindung soll ein neuartiger Geräteschalter geschaffen werden, bei dem die konventionelle Konstruktion von Schaltern genutzt werden könnte, und wobei auf die für konventionelle Geräteschalter eigene Geräteblende und Schuzthaube verzichtet werden könnte, und der unauffällig, sicher und kompakt wäre, bedeutend weniger Teile aufweisen würde, in der Herstellung kostengüngstig wäre und installationstechnisch sich leicht und schnell einbauen ließe. Eine andere Aufgabe der Erfindung besteht darin, einen funktionsmäßig verbesserten Geräteschalter vorzusehen, der die Nachteile der horizontalen und vertikalen Konstruktion eliminieren und ihre Vorteile vereinigen würde.

Dieses Ziel hat man durch den eingangs erwähnten Geräteschalter nach dem Grundprinzip der Erfindung auf solche Weise erreicht, daß der Geräteschalter einen an einer im Gerät befindlichen oder darin ausgeführten Öffnung befestigten oder zu befestigenden Montagerahmen umfaßt, der gleichzeitig als Befestigungsteil für eine in diesem Rahmen einzubauende Schaltereinheit dient, wobei der Sockel des Schalters einen unversehrten Boden aufweist und die Leitungs-Anschlußmittel mit zur Seite offenen Anschlußöffnungen versehen sind, und daß der Montagerahmen als Befestigungsteil der genannten Schaltereinheit angeordnet zumindest die genannten zur Seite offenen Anschlußöffnungen verdeckt und daß der vom Gerät überstehende Teil des Montagerahmens eine die Ränder der Installationsöffnung verdeckende kombinierte Abdeck- und Zentrierplatte bildet.

In hinsicht auf die Vorteile eines Geräteschalters gemäß der vorliegenden Erfindung kann erwähnt werden, daß allein durch den Montagerahmen jetzt die bisher unentbehrliche geräteinterne Schutzhaube und die externe Geräteblende ersetzt werden können, außerdem verleiht der Montagerahmen das Design für den Geräteschalter und funktioniert als Befestigungsorgan in zwei Richtungen: damit wird also der Geräteschalter am Gerät befestigt und damit wird die Schaltereinheit als Bestandteil des Geräteschalters befestigt.

Nach einem zweiten Aspekt der vorliegenden Erfindung ist es außerdem vorteilhaft, daß beim Geräteschalter eine Schaltereinheit benutzt wird, die die für die horizontale Konstruktion eigene schnelle Kontaktbewegung und den für die vertikale Konstruktion eigenen geringen seitlichen Platzbedarf vereinigt, wobei als zusätzlicher Vorteil der Platzbedarf des Geräteschalter vermindert wird und die Kontaktgabe schnell und sicher erfolgt. Dies wird erfindungsgemäß dadurch erreicht, daß der Stell- und Kontaktgliedmechanismus der Schaltereinheit eine bevorzugt zentral abgestützte oder gelagerte Kontaktwippe aufweist, die sich in eingebautem Zustand um eine labile, horizontale Gleichgewichtslage zwischen einer ersten und einer zweiEndlage wippen läßt, und an die sich stationär und elektrisch leitend ein abwärts gerichteter Kontaktarm anschließt, an dessem freien unteren Ende der genannte bewegliche Kontaktstift angeordnet ist, und der bei betätigter Kontaktwippe den beweglichen Kontaktstift mit einer Pendelbewegung gegen den stationären Kontaktstift drückt.

Im folgenden wird die Erfindung unter Verweis auf die beigefügte Zeichnung beschrieben. Es zeigt dabei
FIG. 1 schematisch einen erfindungsgemäßen Geräteschalter fertig installiert, und
FIG. 2 einen Schnitt durch eine vorteilhafte Schaltereinheit, die zum Einbau im erfindungsgemäßen Geräteschalter geeignet ist.

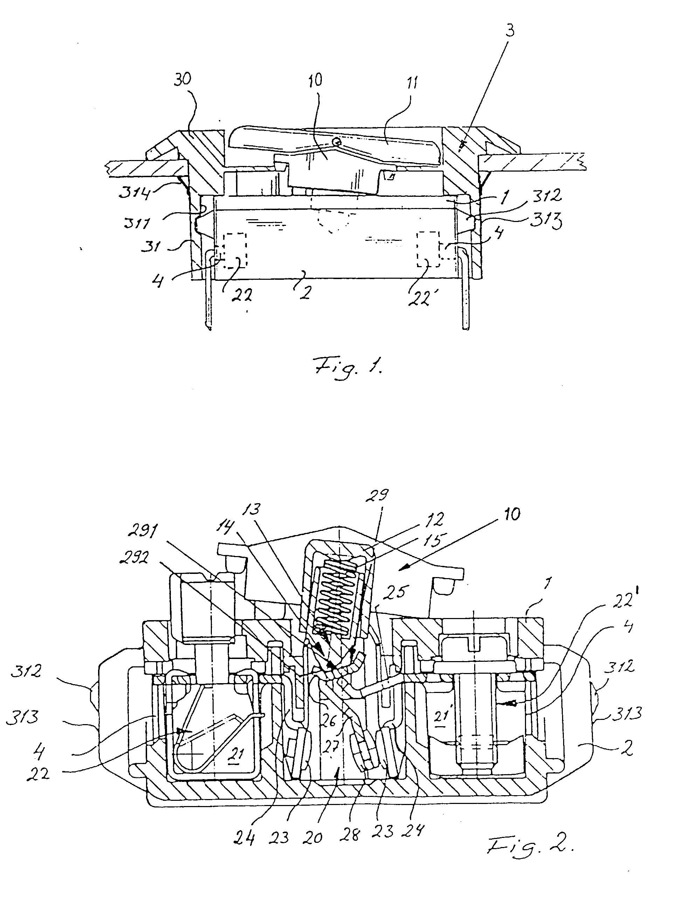

Der in Fig. 1 dargestellte Geräteschalter zum Einbau in ein Elektrogerät oder eine Elektroanlage umfaßt eine Schaltereinheit mit einem Sockel 1, 2, in dem angeordnet sind:
- Leitungs-Anschlußmittel 22, 22' und
- ein über eine Kipptaste 11 oder dgl. zu betätigender beweglicher Stell- und Kontaktmechanismus zur Bildung eines elektrisch leitenden Strompfades über den genannten Strell- und Kontaktgliedmechanismus zwischen mindestens zwei Leitungs-Anschlußmitteln (22, 22').

Der Erfindung zufolge umfaßt der Geräteschalter einen in einer im Gerät befindlichen oder darin ausgeführten Öffnung befestigten oder zu befestigenden Montagerahmen 3, der als Befestigungsteil für eine darin unterzubringende Schaltereinheit dient, deren Sockel 1,2 einen unversehrten Boden aufweist, und deren Leitungs-Anschlußmittel 22, 22' mit zur Seite offenen Anschlußöffnungen 4 versehen sind. Wenn der Montagerahmen 3 als Befestigungsteil der Schaltereinheit angeordnet ist, verdeckt sie die genannten zur Seite offenen Anschlußöffnungen 4. Der vom Gerät überstehende Teil des Montagerahmens 3 bildet eine die Ränder der Installationsöffnung verdeckende kombinierte Abdeck- und Zentrierplatte 30.

Einer vorteilhaften Ausführungsform der Erfindung zufolge setzt sich der Montagerahmen 3 aus einer kombinierten Abdeck- und Zentrierplatte 30 und einem von dort hauptsächlich unversehrt abwärts verlaufendem Randabschsnitt 31 zusammen, der eine Umfassung für den offenen Boden des Montagerahmens 3 bildet, wodurch die Schaltereinheit in den Montagerahmen eingeführt und darin fixiert wird. Wie aus Fig. 1 ferner ersichtlich ist, erstreckt sich der Randabschnitt 31 im wesentlichen über die gesamte Höhe des Sockels 1, 2 der Schaltereinheit und weist an seiner Innenfläche 311 erste Befestigungsorgane 312 zur Fixierung des Sockels 1, 2 der Schaltereinheit und an der Außenfläche 313 zweite Befestigungsorgane 314 zur Fixierung des Geräteschalters in der Montageöffnung auf. Die Befestigungsorgane sind vorzugsweise Rastorgane, was bedeutet, daß sich die Teile einfach durch Drücken gegenüber einander fixieren lassen.

Wie aus Fig. 2 hervorgeht, umfaßt der Sockel der Schaltereinheit gemäß der vorliegenden Erfindung einen oberen Sockelblock 1 und einen unteren Sockelblock 2. Das, wie die Sockelblöcke 1 und 2 miteinander verbunden werden, ist in hinsicht auf die vorliegende Erfindung oder deren Funktion nicht relevant, es kann jedoch festgestellt werden, daß die Sockelblöcke vorteilhafterweise über einen lösbaren Schnappmechanismus, z.B. eine Klemmverbindung (in den Fig. nicht dargestellt) miteinander verbunden sind.

Beim unteren Sockelblock 2 der in Fig. 2 dargestellten Ausführungsform sind eine zentrale Kammer 20 und auf deren beiden Seiten symmetrisch angeordnete Seitenkammern 21 und 21' für die Leitungs-Anschlußmittel 22 und 22' vorgesehen. Die in den Seitenkammern 21 und 21' befindlichen Leitungs- Anschlußmittel 22 und 22' können getrennt sein oder lassen sich über optionale Brückenschaltungen miteinander verbinden, wodurch eine und die selbe Grund-Sockelkonstruktion an die unterschiedlichsten Bedürfnisse und Anwendungsfälle angepaßt werden kann.

Bei der Ausführungsform von Fig. 2 ist mit dem linken Leitungs-Anschlußmittel 22 der in den sich gegenüberliegenden Seitenkammern 21, 21' befindlichen Leitungs-Anschlußmittel 22, 22' ein stationärer Kontaktstift 23 fest und elektrisch leitend verbunden, der in der mittleren Kammer 20, und zwar in ihrem unteren Teil von einem elektrisch leitenden Tragarm 24 derart getragen wird, daß die Kontaktfläche des stationären Kontaktstiftes 23 gegenüber der labilen horizontalen Gleichgewichtslage der Kontaktwippe 26 einen Winkel aufweist, der zwischen 60 und 120 ° liegt. Wie anhand von Fig. 2 weiter festgestellt werden kann, wird einer bevorzugten Ausführungsform der Erfindung zufolge die Kontaktwippe 26 im unteren Sockelblock in der mittleren Kammer 20 auf der Unterseite zentral, von dem elektrisch leitenden freien Ende eines hauptsäch- lich horizontalen Stützarms 25 abgestützt, welcher Stützarm an seinem anderen Ende mit dem rechten der sich gegenüberliegenden Leitungs-Anschlußmittel 22, 22' verbunden ist. Die Kontaktwippe 26 ist auf der Unterseite fest mit einem vertikalen elektrisch leitenden Kontaktarm 27 verbunden, an dessem freien Ende ein mit dem von der Kontaktwippe in Pendelbewegung bewegten Kontaktarm bewegter zweiseitiger Kontaktstift 28 angordnet ist. Einer besonders vorteilhaften Ausführungsform der Erfindung zufolge sind Kontaktarm 27 und Kontaktwippe 26 aus einem einzigen in Form und Winkel gebogenen Metallstreifen gebildet, wobei der Kontaktwippen-Teil von einem gegenüber der labilen horizontalen Gleichgewichtslage der Kontaktwippe wippbaren horinzontalen Teil und der Kontaktarm-Teil von einem senkrechten Teil gebildet wird, der als Folge der Bewegung von Kontaktwippe sich pendelartig bewegt. Der empfohlenen Ausführungsform der Erfindung zufolge beträgt die Wippbewegung der Kontaktwippe gegenüber ihren labilen horizontalen Gleichgewichtslage 0 bis 30 °, und der Ausschlagwinkel des Kontaktarms 27 sowie des damit pendelartig mitschwingenden Kontaktstiftes 28 in beide Richtungen gegenüber der zur genannten labilen horizontalen Gleichgewichtslage der Kontaktwippe senkrechten Vertikalebene 0 bis 30 °, wobei der Kontakt mit dem stationären Kontaktstift 23 optimal erfolgt.

Nach einer vorteilhaften Ausführungsform der vorliegenden Erfindung funktioniert die Oberseite 29 der Kontaktwippe 26 als Gleitfläche für das Nockenglied 14 eines im oberen Sockelblock 1 angeordneten Nockenmechanismus 13. Der obere Sockelblock umfaßt einen wippend beweglichen Betätigungsmechanismus 10. Dieser Betätigungsmechanismus wird durch eine in Fig. 1 dargestellte nach außen sichtbare hebelartig angeordnete Kipptaste 11 betätigt, wovon je nach Bedarf eins bis drei Stück vorgesehen sein können. Im unteren Teil des Betätigungsmechanismus 10 befindet sich ein Hohlraum, in dem ein nach unten offenes Hülsenglied 12 und im Hülsenglied 12 ein Nockenmechanismus 13 angeordnet sind. Es sei festgestellt, daß die Verwendung des Hülsenglieds 12 nicht notwendig ist, denn der Nockenmechanismus läßt sich natürlich auch direkt in Verbindung mit der Kipptaste anordnen. Das Nockenglied 14 wird von einem Federorgan 15 nach unten gegen die Oberseite 29 der horizontalen Kontaktwippe 26 gedrückt, die somit als wippende Gleitfläche für die Spitze des Nockenglieds 14 dient, wenn die Kipptaste zwischen den Endlagen bewegt wird.

Zur Bildung eines elektrisch leitenden Strompfades über den Kontaktarm 27.zwischen den in den gegenüberliegenden Seitenkammern 21 und 21' befindlichen Leitungs-Anschlußmitteln 22 und 22' soll der Betätigungsmechanismus 10 aus der in Fig. 2 abgebildeten Endlage, wo der elektrisch leitende Strompfad zwischen den in den nebeneinanderliegenden Seitenkammern 21' befindlichen Leitungs-Anschlußmitteln 22' hergestellt ist, in die andere Endlage umgeschaltet werden. Dabei bildet sich der Strompfad wie folgt: Leitungs-Anschlußmittel 22' und als Bestandteil davon der Stützarm 25 - Kontaktwippe 26 samt dem ihr zugeordneten Kontaktstift 28 - Kontaktstift 23, der dem linken Tragarm 24 zugeordnet ist, der wiederum ein Bestandteil des Leitungs-Anschlußmittels 22 ist.

Wie aus Fig. 2 festgestellt werden kann, sind da zwei über den Tragarm 24 in der mittleren Kammer 20 angeordnete stationäre Kontaktstifte 23 dargestellt, deren einer, d.h. der rechte in Fig. 2, mit den in einer hinter der in Fig. 2 dargestellten rechten Seitenkammer 21' befindlichen anderen Seitenkammer angeordneten Leitungs-Anschlußmitteln 22' verbunden ist, wobei in der durch Fig. 2 illustrierten Endlage der Kipptaste der elektrisch leitende Strompfad zwischen den Leitungs -Anschlußmitteln 22' zweier nebeneinanderliegender Seitenkammern 21' hergestellt ist. Befindet sich in der mittleren Kammer 20 nur ein einziger stationärer Kontaktstift, kann der Kontaktstift am Kontaktarm 27 der Kontaktwippe 26 einseitig ausgeführt werden, wobei lediglich die an der Kontaktgabe beteiligte Seite des Stiftes aus Kontaktmaterial, z.B. Silber hergestellt ist.

Für die schnelle und sichere Kontaktgabe des erfindungsgemäßen Schalters ist es vorteilhaft, daß die Spitze des Nockenglieds 14 keilförmig gestaltet ist, und daß bei der Kontaktwippe 26 die Gleitfläche für das Nockenglied 14 so gestaltet ist, daß sie einen zentralen geraden Abschnitt 291 und aufwärts geneigte Randabschnitte 292 aufweist. Somit bildet sich an der Kontaktwippe 26 an den Übergängen zwischen dem geraden Abschnitt 291 und den aufwärts geneigten Randabschnitten 292 eine die Gleitbewegung der Spitze des Nockenglieds 14 beschränkende und die Endlagen bestimmende Anschlagszone.

## Patentansprüche

1. Geräteschalter zum Einbau in ein Elektrogerät oder eine Elektroanlage, der eine Schaltereinheit umfaßt, bestehend aus einem Sockel (1, 2) und darin angeordneten: Leitungs-Anschlußmitteln (22, 22'); und einem mittels einer Kipptaste (11) oder dgl. zu betätigenden Stell- und Kontaktgliedmechanismus zur Bildung eines elektrisch leitenden Strompfades über den genannten Stell- und Kontaktgliedmechanismus zwischen mindestens zwei Leitungs-Anschlußmitteln (22, 22'), **dadurch gekennzeichnet,** daß der Geräteschalter einen in einer im Gerät befindlichen oder darin ausgeführten öffnung befestigten oder zu befestigenden Montagerahmen (3) umfaßt, der gleichzeitig als Befestigungsorgan für eine innerhalb dieses Rahmens anzuordnende Schaltereinheit funktioniert, wobei der Sockel (1, 2) des Geräteschalters einen unversehrten Boden aufweist und die Leitungs-Anschlußmittel (22, 22') mit zur Seite offenen Anschlußöffnungen (4) versehen sind, und daß der Montagerahmen (3) als Befestigungsteil der genannten Schaltereinheit eingesetzt mindestens die genannten zur Seite offenen Anschlußöffnungen (4) verdeckt und daß der vom Gerät überstehende Teil des Montagerahmens (3) eine die Ränder der Montageöffnungen verdeckende kombinierte Abdeck- und Zentrierplatte (30) bildet.

2. Geräteschalter gemäß Anspruch 1, **dadurch gekennzeichnet,** daß sich der Montagerahmen (3) aus einer kombinierten Abdeck- und Zentrierplatte (30) und einem von hier nach unten im wesentlichen unversehrt verlaufenden Randabschnitt (31) besteht, der eine Umfassung für den offenen Boden des Montagerahmens (3) bildet, und daß an der Innenseite (311) des sich im wesentlichen über die Höhe des Sockels der gesamten Schaltereinheit (1, 2) erstreckenden Randabschnittes (31) erste Befestigungsorgane (312) zur Fixierung der Schaltereinheit und an der Außenseite (313) zweite Befestigungsorgane (314) für das Einrasten des Geräteschalters in der Montageöffnung vorgesehen sind.

3. Geräteschalter gemäß Anspruch 1 oder 2, wobei die Schaltereinheit einen Schalter umfaßt, bestehend aus: einem oberen Sockelblock (1) und einem unteren Sockelblock (2); Leitungs-Anschlußmitteln (22, 22'), wobei mit mindestens einem davon ein stationärer Kontaktstift (23) verbunden ist; und einem über eine Kipptaste (11) zu betätigenden beweglichen Stell- und Kontaktgliedmechanismus, der einen beweglichen Kontaktstift (28) zur Bildung eines elektrisch leitenden Stropfades über den genannten Stellund Kontaktgliedmechanismus zwischen mindestens zwei Leitungs-Anschlußmitteln (22, 22') aufweist, **dadurch gekennzeichnet,** daß der Stell- und Kontaktgliedmechanismus eine bevorzugt zentral abgestützte oder gelagerte Kontaktwippe (26) umfasst, die sich um eine labile, horizontale Gleichgewichtslage zwischen einer ersten und einer zweiten Endlage wippen läßt und mit der fest und elektrisch leitend ein nach unten gerichteter Kontaktarm (27) verbunden ist, an dessem freien unteren Ende der genannte bewegliche Kontaktstift (28) vorgesehen ist, und der bei Bewegung der Kontaktwippe (26) den beweglichen Kontaktstift (28) in pendelartiger Bewegung gegen den stationären Kontaktstift (23) drückt.

4. Geräteschalter gemäß Anspruch 3, **dadurch gekennzeichnet,** daß der untere Sockelblock (2) eine zentrale Kammer (20) und auf deren beiden Seiten symmetrisch angeordnete Seitenkammern (21, 21') aufweist, und daß die Leitungs-Anschlußmittel (22, 22') in den Seitenkammern (21, 21') angeordnet sind, daß der mit dem Leitungs-Anschlußmittel (22, 22') verbundene stationäre Kontaktstift (23) im unteren Teil der mittleren Kammer (20) von einem elektrisch leitenden Tragarm (24) auf solche Weise getragen wird, daß die Kontaktfläche des stationären Kontaktstiftes (23) gegenüber der labilen horizontalen Gleichgewichtslage der Kontaktwippe (26) in einem Winkel zwischen 60 und 120 ° angeordnet ist und daß die Kontaktwippe (26) in der mittleren Kammer (20) auf der Unterseite, bevorzugt zentral, von einem elektrisch leitenden Tragarm (25) getragen wird, der an seinem anderen Ende mit dem Leitungs-Anschlußmittel (22, 22') verbunden ist.

5. Geräteschalter gemäß Anspruch 4, **dadurch gekennzeichnet,** daß der Kontaktarm (27) und die Kontaktwippe (26) aus einem in Form und Winkel gebogenen Metallstreifen gebildet werden, wobei der Kontaktwippen-Teil aus einem gegenüber der labilen horizontalen Gleichgewichtslage der genannten Kontaktwippe wippbaren Horizontalteil und der Kontaktarm-Teil aus einem sich mit der Bewegung der Kontaktwippe pendelartig bewegenden Vertikalteil bestehen.

6. Geräteschalter gemäß einem der Ansprüche 3 bis 5, **dadurch gekennzeichnet,** daß die Oberseite (29) der Kontaktwippe als Gleitfläche für den nach unten gerichteten Nockenmechanismus (13) des Betätigungsmechanismus dient.

7. Schalter gemäß einem der Ansprüche 3 bis 6, **dadurch gekennzeichnet,** daß die Wippbewegung der Kontaktwippe um ihre labile horizontale Gleichgewichtslage zwischen 0 und 30° liegt und daß der Ausschlagwinkel des Kontaktarms (27) und des sich damit pendelartig bewegenden Kontaktstiftes in beide richtungen gegenüber der zur genannten labilen horizontalen Gleichgewichtslage der Kontaktwippe senkrechten Vertikalebene 0 bis 30 ° beträgt.

8. Geräteschalter gemäß einem der Ansprüche 1 bis 7, **dadurch gekennzeichnet,** daß eine zur Betätigung des Stell- und Kontaktgliedmechanismus des Schaltereinheit geeignete Kipptaste (11) als Bestandteil der kombinierten Abdeck- und Zentrierplatte (30) des Montagerahmens (3) angeordnet ist.

## Claims

1. Appliance switch for installation in an electric appliance or an electric system, which comprises a switch unit consisting of a socket (1, 2) and arranged therein conductor connecting means (22, 22'); and an adjusting and contact member mechanism, operated by means of a pivot key (11) or the like, for creating an electrically conducting current path over the said adjusting and contact member mechanism between at least two conductor connecting means (22, 22'), **characterised** in that the appliance switch comprises an installation frame (3), attached to or to be attached to an opening situated in the appliance or constructed therein, which simultaneously operates as attachment member for a switch unit to be arranged within this frame, wherein the socket (1, 2) of the appliance switch has an intact base and the conductor connecting means (22, 22') are provided with connection openings (4) which are open on the sides, and that the assembly frame (3), used as the attachment part of the said switch unit, covers at least the said connection openings (4) open on the sides and that the part of the assembly frame (3) projecting from the appliance forms a combined cover and centring plate (30) covering the edges of the assembly openings.

2. Appliance switch according to claim 1, **characterised** in that the assembly frame (3) consists of a combined cover and centring plate (30) and an edge section (31) running from here downwards in the essentially intact edge section (31) which forms an envelopment for the open base of the assembly frame (3), and that on the inside (311) of the edge section (31) extending over essentially the height of the socket of the entire switch unit (1, 2) there are provided first attachment members (312) for the attachment of the switch unit and on the outside (313) there are provided second attachment members (314) for the engagement of the appliance switch in the assembly opening.

3. Appliance switch according to claim 1 or 2, in which the switch unit comprises a switch consisting of an upper socket block (1) and a lower socket block (2); conductor connecting means (22, 22') at least one of which connects to a stationary contact pin (23); and a movable adjusting and contact member mechanism, to be operated via a pivot key (11), which has a movable contact pin (28) for forming an electrically conducting current path via the said adjusting and contact member mechanism between at least two conductor-connecting means (22, 22'), **characterised** in that the adjusting and contact member mechanism comprises a preferably centrally supported or mounted contact rocker (26) which can be pivoted about an unstable, horizontal position of equilibrium between a first and second end position and to which is connected in a firm and electrically conducting manner a downwardly directed contact arm (27) on the exposed lower end of which is arranged the said movable contact pin (28), and which on movement of the contact rocker (26) pushes the movable contact pin (28) in pendular fashion against the stationary contact pin (23).

4. Appliance switch according to claim 3, **characterised** in that the lower socket block (2) has a central chamber (20) and side chambers (21, 21') symmetrically arranged on the two sides of the chamber, and that the conductor connecting means (22, 22') are arranged in the side chambers (21, 21'), that the stationary contact pin (23) connected to the conductor-connecting means (22, 22') in the lower part of the central chamber (20) is supported by an electrically conducting carrier arm (24) in such a way that the contact surface of the stationary contact pin (23) is arranged at an angle between 60 and 120° with respect to the unstable horizontal position of equilibrium of the contact rocker (26) and that the contact rocker (26) in the central chamber (20) on the underside, preferably central, is supported by an electrically conducting carrier arm (25) whose other end is connected to the conductor-connecting means (22, 22').

5. Appliance switch according to claim 4, **characterised** in that the contact arm(27) and the contact rocker (26) are formed by bending a metal strip into shape and angle, wherein the contact rocker part consists of a horizontal part pivotable with respect to the unstable horizontal position of equilibrium of the said contact rocker and the contact arm part consists of a vertical part which moves in pendular fashion with the movement of the contact rocker.

6. Appliance switch according to one of the claims 3 to 5, **characterised** in that the upper side (29) of the contact rocker serves as the sliding surface for the downwardly directly cam mechanism (13) of the operating mechanism.

7. Switch according to one of the claims 3 to 6, **characterised** in that the pivot movement of the contact rocker about its unstable, horizontal position of equilibrium lies between 0 and 30° and that the angle of deflection of the contact arm (27) and the contact pin moving with it in pendular fashion in both directions with respect to the perpendicular vertical plane of the said unstable horizontal position of equilibrium lies between 0 and 30°.

8. Appliance switch according to one of the claims 1 to 7, **characterised** in that a pivot key (11) suitable for operating the adjusting and contact member mechanism of the switch unit is arranged as constituent part of the combined cover and centring plate (30) of the assembly frame (3).

## Revendications

1. Commutateur d'appareil, à installer dans un appareil électrique ou une installation électrique, qui comporte une unité de commutation constituée d'un socle (1, 2) dans lequel sont disposés: des moyens (22, 22') de raccordement de conducteurs; et d'un mécanisme à organe d'ajustement et de contact à actionner par une touche basculante (11) ou similaire pour former par l'intermédiaire dudit mécanisme à organe d'ajustement et de contact un parcours de courant entre au moins deux moyens (22, 22') de raccordement de conducteurs, caractérisé en ce que le commutateur d'appareil comporte un cadre de montage (3) fixé ou à fixer dans une ouverture située dans l'appareil ou pratiquée dans ce dernier, lequel cadre de montage sert en même temps d'organe de fixation pour une unité de commutation à installer à l'intérieur de ce cadre, le socle (1, 2) du commutateur d'appareil présentant une base non entamée et les moyens (22, 22') de raccordement de conducteurs étant dotés d'orifices de raccordement (4) ouverts latéralement, et en ce que le cadre de montage (3) inséré comme pièce de fixation de ladite unité de commutation recouvre au moins lesdits orifices de raccordement (4) ouverts latéralement, et en ce que la partie du cadre de montage (3) qui déborde de l'appareil forme une plaque combinée de recouvrement et de centrage (30) recouvrant les bords des ouvertures de montage.

2. Commutateur d'appareil selon la revendication 1, caractérisé en ce que le cadre de montage (3) est constitué d'une plaque combinée de recouvrement et de centrage (30) et d'une partie de bordure (31) essentiellement non entamée, qui s'étend vers le bas et qui forme une périphérie pour la base ouverte du cadre de montage (3), et en ce que sur le côté intérieur (311) de la partie de bordure (31) qui s'étend essentiellement sur la hauteur du socle (1, 2) de l'ensemble de l'unité de commutation sont prévus des premiers moyens de fixation (312) pour la fixation de l'unité de commutation, et sur le côté extérieur (313) sont prévus des deuxièmes organes de fixation (314) pour l'accrochage élastique du commutateur d'appareil dans l'ouverture de montage.

3. Commutateur d'appareil selon les revendications 1 ou 2, dans lequel l'unité de commutation comporte un commutateur constitué: d'un bloc supérieur de socle (1) et d'un bloc inférieur de socle (2); de moyens (22, 22') de raccordement de conducteurs, un contact fixe (23) étant relié à au moins un de ces moyens; et d'un mécanisme mobile à organe d'ajustement et de contact à actionner par l'intermédiaire d'une touche basculante (11), présentant un contact mobile (28) en vue de la formation d'un parcours conducteur de courant électrique entre au moins deux moyens (22, 22') de raccordement de conducteurs, par l'intermédiaire dudit mécanisme à organe d'ajustement et de contact, caractérisé en ce que le mécanisme à organe d'ajustement et de contact comporte une bascule de contact (26) qui est montée ou soutenue de préférence centralement, qui peut basculer entre une première et une deuxième position d'extrémité autour d'une position horizontale labile d'équilibre et à laquelle est relié de manière fixe et électriquement conductrice un bras de contact (27) dirigé vers le bas, à l'extrémité inférieure libre duquel est prévu ledit contact mobile (28) et qui, lorsque la bascule de contact (26) se déplace, repousse le contact mobile (28) suivant un déplacement pendulaire contre le contact fixe (23) .

4. Commutateur d'appareil selon la revendication 3, caractérisé en ce que le bloc inférieur de socle (2) présente une chambre centrale (20) dotée sur les deux côtés de chambres latérales (21, 21') disposées symétriquement, en ce que les moyens (22, 22') de raccordement de conducteurs sont disposés dans les chambres latérales (21, 21'), en ce que le contact fixe (23) relié aux moyens (22, 22') de raccordement de conducteurs est porté dans la partie inférieure de la chambre centrale (20) par un bras de support (24) électriquement conducteur, de telle sorte que la surface de contact du contact fixe (23) soit disposée à un angle de 60 à 120° par rapport à la position horizontale labile d'équilibre de la bascule de contact (26), et en ce que dans la chambre centrale (20), la bascule de contact (26) est portée sur le côté inférieur, de préférence centralement, par un bras de support (25) électriquement conducteur qui est relié à son autre extrémité aux moyens (22, 22') de raccordement de conducteurs.

5. Commutateur d'appareil selon la revendication 4, caractérisé en ce que le bras de contact (27) et la bascule de contact (26) sont formés d'une bande métallique coudée, la partie formant la bascule de contact étant constituée d'une partie horizontale pouvant basculer par rapport à la position horizontale labile d'équilibre de ladite bascule de contact et la partie formant le bras de contact étant constituée d'une partie verticale se déplaçant de manière pendulaire avec le déplacement de la bascule de contact.

6. Commutateur d'appareil selon l'une des revendications 3 à 5, caractérisé en ce que le côté supérieur (29) de la bascule de contact sert de surface de glissement pour le mécanisme à came (13), orienté vers le bas, du mécanisme d'actionnement.

7. Commutateur d'appareil selon l'une des revendications 3 à 6, caractérisé en ce que le déplacement de bascule de la bascule de contact autour de sa position horizontale labile d'équilibre est compris entre 0 et 30°, et en ce que l'angle de déviation du bras de contact (27) et du contact qui se déplace de manière pendulaire avec lui est compris dans les deux directions entre 0 et 30° par rapport au plan vertical perpendiculaire à ladite position horizontale labile d'équilibre de la bascule de contact.

8. Commutateur d'appareil selon l'une des revendications 1 à 7, caractérisé en ce qu'une touche basculante (11) servant à actionner le mécanisme à organe d'ajustement et de contact de l'unité de commutation fait partie intégrante de la plaque combinée de recouvrement et de centrage (30) du cadre de montage (3).
